# EUROPEAN PATENT SPECIFICATION

(11) **EP 4 261 103 B1**
(45) Date of publication and mention of the grant of the patent: **14.05.2025**
(21) Application number: 21922004.3
(22) Date of filing: 26.02.2021
(51) Int. Cl.: B62B 9/10, B62B 9/24, A47D 13/02

(54) **CHILD SEAT DEVICE AND CHILD PRODUCT**
KINDERSITZVORRICHTUNG UND KINDERPRODUKT
DISPOSITIF DE SIÈGE POUR ENFANT ET PRODUIT POUR ENFANT

(30) Priority: 29.01.2021 CN 202110126418
(43) Date of publication of application: 18.10.2023
(73) Proprietor: Goodbaby Child Products Co., Ltd., Kunshan, Jiangsu 215331 (CN)
(72) Inventor: GAO, Xiang, Kunshan, Jiangsu 215331 (CN); LI, Feng, Kunshan, Jiangsu 215331 (CN)
(74) Representative: De Vries & Metman
(86) International application number: PCT/CN2021/078180
(87) International publication number: WO 2022/160405

(56) References cited:
- CN-A- 1 282 298
- CN-A- 107 161 202
- CN-A- 112 849 255
- CN-A- 112 918 542
- CN-U- 204 547 854
- CN-U- 205 345 008
- JP-A- 2005 162 151
- JP-A- 2005 162 151
- JP-A- 2012 025 229
- KR-A- 20120 010 102
- US-A1- 2020 008 587
- US-B1- 6 698 841

## Description

### Technical Field of the Invention

The present invention relates to a child seat device, and a child product having the child seat device.

### Background of the Invention

Existing children's products such as children's sitting saddles, children's strollers and other children's products are provided with a child seat device; the child seat device has a seat, a backrest, and a seat belt assembly to restrain the child in the seat device; the seat belt assembly includes a crotch strap and a shoulder strap, the crotch strap is connected to the seat, and the shoulder strap is connected to the backrest. Examples of such products are described in documents KR20120010102A, JP2005162151A, US2020/008587A1 and CN205345008U.

Usually, in order to meet the different needs of children's sitting posture changes, such as sitting at different leaning angles and lying posture changes, the backrest is usually adjustable in angle relative to the seat.

However, after the angle of the backrest relative to the seat is adjusted, such as changed from the sitting-posture state to the lying-posture state, a distance between the position of the shoulder strap connected to the backrest and the position of the crotch strap connected to the seat becomes longer, resulting in the seat belt being taut, causing the child's body to be bound very tight and causing uncomfortable sitting. At present, this problem is mainly solved by adjusting the length of the crotch strap or shoulder strap, but this leads to that the user needs to adjust the length of the seat belt in every adjustment of the angle of the backrest, causing the inconvenience of use.

### Summary of the Invention

The purpose of the present disclosure is to overcome the defects of the prior art and provide a new child seat device.

To achieve the above purpose, a technical solution employed by the present invention is: a child seat device comprises a backrest, a seat and a tether system, the backrest is rotatably connected to the seat, the seat device has a sitting side and a back side, the tether system comprises a shoulder strap and a crotch strap, the shoulder strap is arranged on the backrest, the crotch strap has a connecting end and a fixed end, the connecting end and the fixed end are respectively arranged on two opposite end portions of the length extension direction of the crotch strap, the portion of the crotch strap on the sitting side is a first strap segment, the connecting end is located on the first strap segment and can be detachably connected to one end of the shoulder strap, the fixed end is fixedly connected to the back side of the seat device, the seat device has a sitting-posture state and a lying-posture state, the length of the first strap segment in the sitting-posture state is shorter than the length of the first strap segment in the lying-posture state, and during the transition process of the seat device from the sitting-posture state to the lying-posture state, the length of the first strap segment gradually becomes longer.

Preferably, the crotch strap passes through the seat in a manner of being able to slide in its own length direction, and during the transition process of the seat device between the sitting-posture state and the lying-posture state, the sliding of the crotch strap relative to the seat causes the length of the first strap segment to change.

Further, the crotch strap further has a second strap segment on the back side, the fixed end is located on the second strap segment, the second strap segment and the first strap segment are connected in the length direction, and the longer the first strap segment, the shorter the second strap segment.

Preferably, the fixed end is fixedly connected to the backrest.

In one specific embodiment, the backrest has an anchoring element, the fixed end is fixedly connected to the anchoring element, and the anchoring element and the rotation centerline of the backrest relative to the seat are spaced in the height direction of the backrest.

In one specific embodiment, the anchoring element is located on the backrest above the rotation centerline of the backrest relative to the seat.

In one specific embodiment, a lower portion of the backrest is connected to a rear portion of the seat through a soft component, or, a lower portion of the backrest is rotatably connected to a rear portion of the seat through a rotation shaft, and the rotation centerline between the seat and the backrest extends in a left-right direction.

Preferably, the shoulder strap slides through the backrest, the tether system further comprises an adjustment strap, the adjustment strap is fixedly arranged on the shoulder strap, the adjustment strap has a connection position in front of the seat, and an adjustment segment between the connection position and the shoulder strap, and the seat is provided with a strap adjustment mechanism for adjusting the length of the adjustment segment.

In one specific embodiment, the strap adjustment mechanism is a one-way lock mechanism or an automatic winding mechanism.

In one specific embodiment, the adjustment segment is located on the back side, the adjustment strap is slidably connected to a front portion of the seat, and the adjustment strap has an extension segment extending to the sitting side.

In one specific embodiment, the position where the crotch strap is arranged on the seat is behind the connection position between the adjustment strap and the seat in the length extension direction of the seat.

In one specific embodiment, the shoulder strap comprises a left shoulder strap and a right shoulder strap, the left shoulder strap and the right shoulder strap respectively slide through the backrest, each of the left shoulder strap and the right shoulder strap has a first end portion and a second end portion arranged at two opposite ends of its own length direction, the first end portions can be detachably connected to the connecting end of the crotch strap, and the two second end portions are fixedly arranged on the adjustment strap.

As another preferred way, one end portion of the shoulder strap is fixedly arranged on the backrest, and the other end portion of the shoulder strap is detachably connected to the connecting end of the crotch strap.

Another purpose of the present invention is to provide a child product having the above-mentioned child seat device.

To achieve the above purpose, a technical solution employed by the present invention is: a child product comprises the above-mentioned child seat device.

Preferably, the child product is a child stroller or a child sitting saddle.

Due to the use of the above technical solutions, the present invention has the following advantages over the prior art: In the child seat device and the child product having the child seat device of the present invention, when a child sits in this seat device, and when adjusting the angle between the backrest and the seat to meet the needs of the child in different sitting or lying postures, the tether system can be adjusted with the rotation of the backrest and automatically compensate for the total length of a safety belt on the front side of the child body when the backrest angle is increased, such that the child is not bound too tightly; when the backrest angle is decreased, the total length of the safety belt on the front side of the child body is automatically reduced so as to ensure that the tether system binds the child firmly.

### Brief Description of the Drawings

Figure 1 to Figure 4 are respectively a stereoscopic schematic diagram, front-view schematic diagram, side-view schematic diagram and rear-view schematic diagram of the child sitting saddle in Embodiment 1 of the present invention, where the seat device is in a sitting-posture state;
Figure 5 to Figure 8 are respectively a stereoscopic schematic diagram, rear-view schematic diagram, side-view schematic diagram and front-view schematic diagram of the child sitting saddle in Embodiment 1 of the present invention, where the seat device is in a lying-posture state;
Figure 9 to Figure 11 are respectively a stereoscopic schematic diagram, rear-view schematic diagram and side-view schematic diagram of the child sitting saddle in Embodiment 1 of the present invention with the shoulder strap and the adjustment strap omitted, where the seat device is in a sitting-posture state;
Figure 12 to Figure 14 are respectively a stereoscopic schematic diagram, rear-view schematic diagram and side-view schematic diagram of the child sitting saddle in Embodiment 1 of the present invention with the shoulder strap and the adjustment strap omitted, where the seat device is in a lying-posture state;
Figure 15 to Figure 17 are respectively a stereoscopic schematic diagram, side-view schematic diagram and front-view schematic diagram of the child sitting saddle in Embodiment 2 of the present invention, where the seat device is in a sitting-posture state;
Figure 18 to Figure 20 are respectively a stereoscopic schematic diagram, side-view schematic diagram and front-view schematic diagram of the child sitting saddle in Embodiment 2 of the present invention, where the seat device is in a lying-posture state;
Figure 21 to Figure 24 are respectively a stereoscopic schematic diagram, front-view schematic diagram, side-view schematic diagram and rear-view schematic diagram of the child sitting saddle in Embodiment 3 of the present invention, where the seat device is in a sitting-posture state;
Figure 25 to Figure 28 are respectively a stereoscopic schematic diagram, front-view schematic diagram, side-view schematic diagram and rear-view schematic diagram of the child sitting saddle in Embodiment 3 of the present invention, where the seat device is in a lying-posture state;
Figure 29 to Figure 31 are respectively a stereoscopic schematic diagram, front-view schematic diagram and side-view schematic diagram of the child sitting saddle in Embodiment 4 of the present invention, where the seat device is in a sitting-posture state;
Figure 32 to Figure 34 are respectively a stereoscopic schematic diagram, front-view schematic diagram and side-view schematic diagram of the child sitting saddle in Embodiment 4 of the present invention, where the seat device is in a lying-posture state;
wherein, 1, backrest; 11, anchoring element; 2, seat; 21, one-way lock mechanism; 3, tether system; 31, shoulder strap; 31a, first end portion; 31b, second end portion; 311, adjustment strap; 311a, adjustment segment; 311b, extension segment; 312, left shoulder strap; 313, right shoulder strap; 32, crotch strap; 321, connecting end; 322, fixed end; 32a, first strap segment; 32b, second strap segment; 4, waist strap; 5, buckle assembly; 6, rotation shaft.

### Detailed Description of Exemplary Embodiments

The technical solution of the present invention is further described below combining with the accompanying drawings and specific embodiments.

For the convenience of description, the following descriptions of up and down, front and rear, left and right directions are defined based on the direction observed by a child sitting on the seat device.

### Embodiment 1

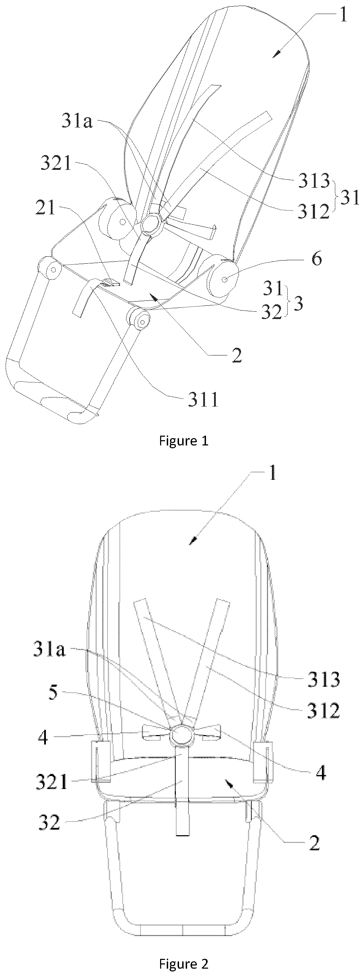

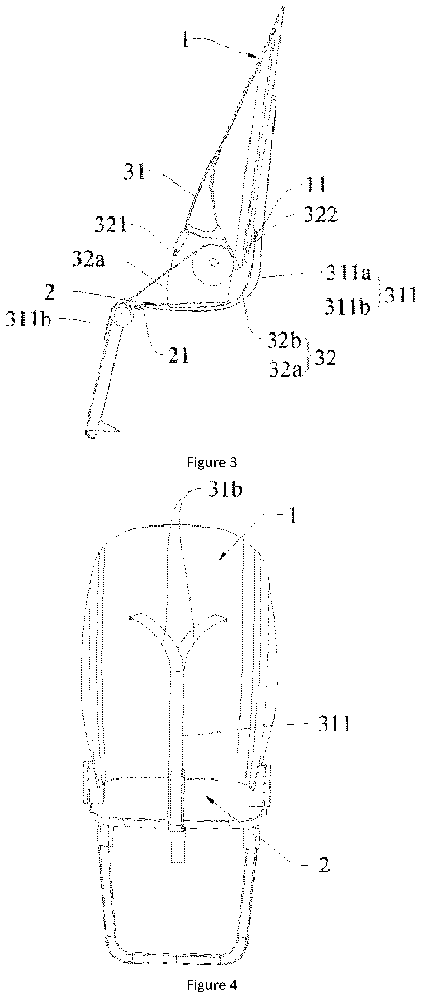

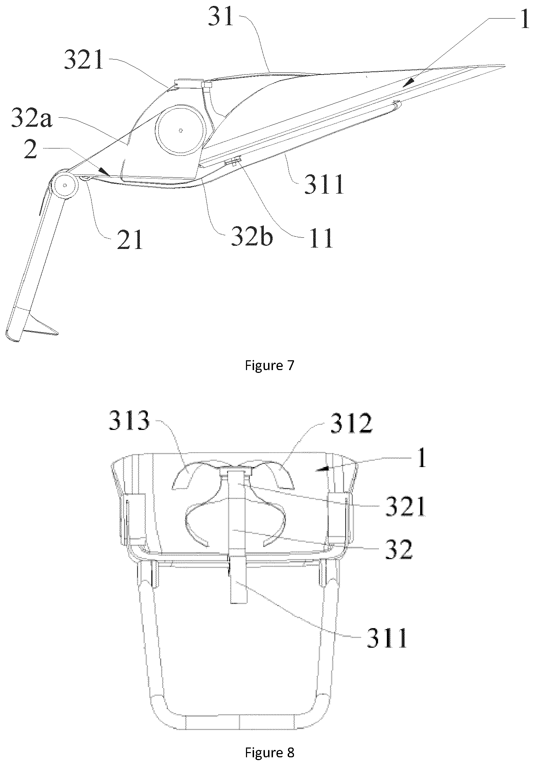

A child seat device is shown in Figure 1 to Figure 8, here is specifically a child sitting saddle, which comprises a backrest 1, a seat 2 and a tether system 3, and the angle between the backrest 1 and the seat 2 can be adjusted. Here, a lower portion of the backrest 1 is rotatably connected to a rear portion of the seat 2 by a rotation shaft 6, the axial line of the rotation shaft 6 extends in a left-right direction, that is, the rotation centerline of the backrest 1 relative to the seat 2 extends in the left-right direction; a lock mechanism is further arranged between the seat 2 and the backrest 1 to lock the backrest 1 and the seat 2 at different angle positions, so that the backrest 1 has different usage angels relative to the seat 2. In other embodiments, the lower portion of the backrest 1 may be connected to the rear portion of the seat 2 through a soft connecting member, and another mechanism is used to restrict the angle of the backrest 1, so that the angle stabilizes at the adjusted angle position. The seat device has a sitting side and a back side, the sitting side and the back side are separated by the backrest 1 and the seat 2, that is, the side on which a child sits when the child is riding is the sitting side, in front of backrest 1 and above the seat 2 are the sitting side, while below the seat 2 and behind the backrest 1 are the back side.

The tether system 3 comprises a shoulder strap 31 and a crotch strap 32, the crotch strap 32 has a connecting end 321 and a fixed end 322 respectively arranged on two opposite end portions of its own length extension direction, the crotch strap 32 passes through the seat 2 in a manner of being able to slide in its own length direction, the connecting end 321 is located on the sitting side, and is detachably connected with one end portion of the shoulder strap 31 through a buckle assembly 5, and the fixed end 322 is fixedly connected to the backrest 1.

Specifically, the fixed end 322 is located on the back side, and is fixed on the back of the backrest 1. Here, the back of the backrest 1 is fixedly provided with an anchoring element 11, the fixed end 322 is fixedly connected to the anchoring element 11, to form an anchoring point on the backrest 1. The position of the anchoring point on the backrest 1 is above the rotation centerline of the backrest 1 relative to the seat 2, and the aforementioned anchoring point and the rotation centerline of the backrest 1 relative to the seat 2 are spaced in the height direction of the backrest 1.

In this way, the crotch strap 32 has a first strap segment 32a and a second strap segment 32b that are connected in the length direction, the first strap segment 32a is on the sitting side, the second strap segment 32b is located on the back side, the connecting end 321 is located at the outer end of the first strap segment 32a, and the fixed end 322 is located at the outer end of the second strap segment 32b. It should be noted that the length of crotch strap 32 is constant, which is equal to the sum of the length of the first strap segment 32a and the length of the second strap segment 32b. The first strap segment 32a and the second strap segment 32b are not of a fixed length, but can vary in length according to the rotation angle of the backrest 1. When the crotch strap 32 slides relative to the seat 2, the length of the first strap segment 32a and the length of the second strap segment 32b change inversely. In this embodiment, the shoulder strap 31 slides through the backrest 1. The tether system 3 further comprises an adjustment strap 311, the adjustment strap 311 is fixedly arranged on the shoulder strap 31, the adjustment strap 311 has a connection position in front of the seat 2, a strap adjustment mechanism is arranged at the connection position, the part of the adjustment strap 311 between the aforementioned connection position and the shoulder strap 31 is an adjustment segment 311a, and the strap adjustment mechanism is used for adjusting the length of the adjustment segment 311a.

The adjustment segment 311a is located on the back side of the seat device, the adjustment strap 311 further has an extension segment 311b extending to the sitting side, and by operating the extension segment 311b, the strap adjustment mechanism can adjust the length of the adjustment segment 311a.

Specifically , the shoulder strap 31 comprises a left shoulder strap 312 and a right shoulder strap 313, the left shoulder strap 312 and the right shoulder strap 313 respectively slide through the backrest 1, each of the left shoulder strap 312 and the right shoulder strap 313 has a first end portion 31a and a second end portion 31b arranged at two opposite ends of its own length direction, and the two first end portions 31a are detachably connected to the connecting end 321 of the crotch strap 32 through the buckle assembly 5.

One end portion of the adjustment strap 311 is fixed on the two second end portions 31b, and the other end is connected to the front of the seat 2 by bypassing the backrest 1 and the bottom of the seat 2, and then passes through the strap adjustment mechanism and penetrates above the seat 2, and the part of the adjustment strap 311 located above the seat 2 forms the extension segment 311b.

The strap adjustment mechanism can adopt a one-way lock mechanism or an automatic winding mechanism, here, a one-way lock mechanism 21 is used, which has a one-way locking element with a ratchet structure, so that the adjustment strap 311 can only be locked and pulled in a single direction, specifically here, when keeping the one-way lock mechanism 21 locked, the user can lengthen the adjustment segment 311a by pulling the shoulder strap 31; when it is necessary to shorten the adjustment segment 311a, the user can unlock the one-way locking element, and then pull the extension segment 311b forward to make the adjustment strap 311 slide and shorten the adjustment segment 311a.

The position where the crotch strap 32 is arranged on the seat 2 is behind the connection position between the adjustment strap 311 and the seat 2 in the front-rear length extension direction of the seat 2, specifically, the seat 2 is provided with a through hole that runs through the thickness direction, the crotch strap 32 slides through the through hole along its own length direction, and the one-way lock mechanism 21 is arranged in front of the through hole on the seat 2.

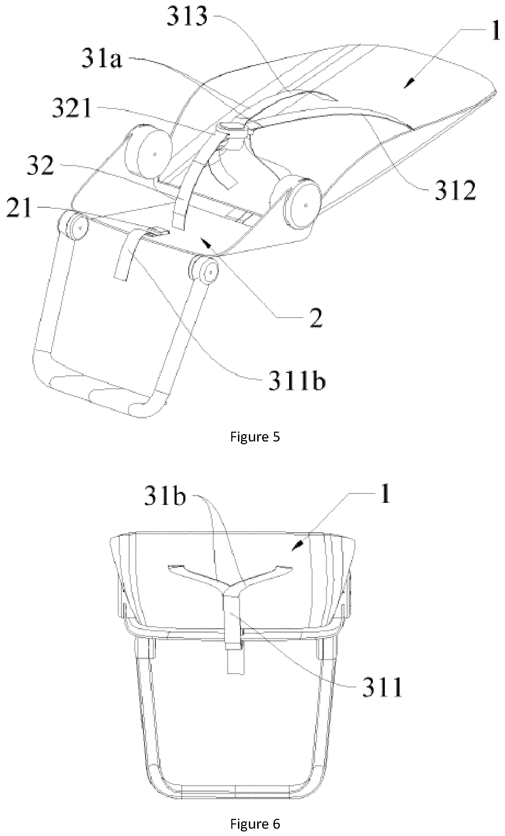

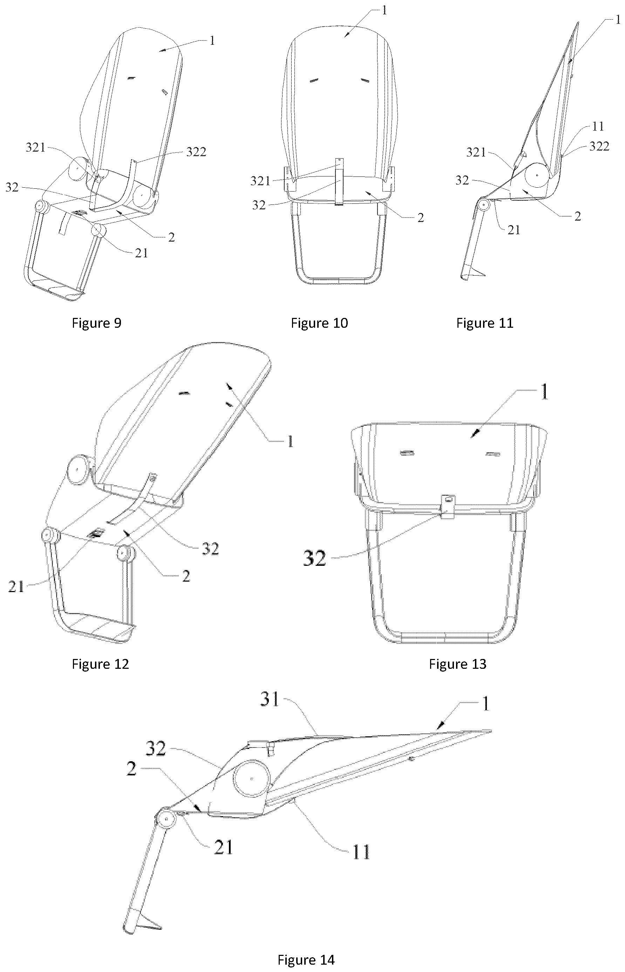

Thus, when the child seat device is in a sitting-posture state, as shown in Figure 1 to Figure 4 and Figure 9 to Figure 11, the backrest 1 is in an upright state; when the child seat device is switched to a lying- posture state, as shown in Figure 5 to Figure 8 and Figure 12 to Figure 14, the backrest 1 is rotated backwards relative to the seat 2, and the angle between the backrest 1 and the seat 2 increases, here, the angle between the backrest 1 and the seat 2 is viewed from the sitting side of the seat device, specifically referring to the angle between the leaning surface of the backrest 1 for a child to lean on and the sitting surface of the seat 2 for a child to sit on. It can be seen that the length of the crotch strap 32 wound between the through hole on the seat 2 and the fixed end 322 is shortened, resulting in a shorter length of the crotch strap 32 on the back side and a longer length of the crotch strap 32 on the sitting side of the seat 2, in other words, the larger the angle between the backrest 1 and the seat 2, the shorter the second strap segment 32b, and accordingly the longer the first strap segment 32a, which compensates for the total length of the crotch strap 32 and the shoulder strap 31 on the front side of a child body, so as not to be taut on the child's body.

At the same time, through the one-way lock mechanism 21, the user can further release the adjustment strap 311, resulting in a longer length of the adjustment segment 311a of the adjustment strap 311, so that both the left shoulder strap 312 and the right shoulder strap 313 can be partially released to the front of the child body, further compensating for the total length of the crotch strap 32 and shoulder strap 31 located on the front of the child body, further avoiding the tether system 3 from binding the child too tightly.

When the child seat device is switched from a lying-posture state to a sitting-posture state, the angle of the backrest 1 relative to the seat 2 decreases, and during the rotation of the backrest 1 towards the seat 2, the fixed end 322 is pulled up, causing the crotch strap 32 to be pulled towards the back side, reducing the length of the crotch strap 32 and the shoulder strap 31 located on the front of the child body, making the child firmly bound to the child seat device.

Of course, when the backrest 1 needs to be adjusted between different sitting-posture states, the angle change of the backrest 1 will cause the crotch strap 32 to slide along its own length direction and correspondingly adjust the length on the sitting side or back side of the seat 2, compensating for the total length of the crotch strap 32 and the shoulder strap 31 located on the front side of the child body, avoiding the tether system 3 from binding the child too tightly.

In this embodiment, the tether system 3 adopts a five-point safety strap, which further comprises two waist straps 4 connected to the left and right sides of the lower portion of the backrest 1, the end portions of the waist straps 4 are detachably connected to the crotch strap 32 and shoulder strap 31 through the buckle assembly 5 to achieve stable binding of the child.

### Embodiment 2

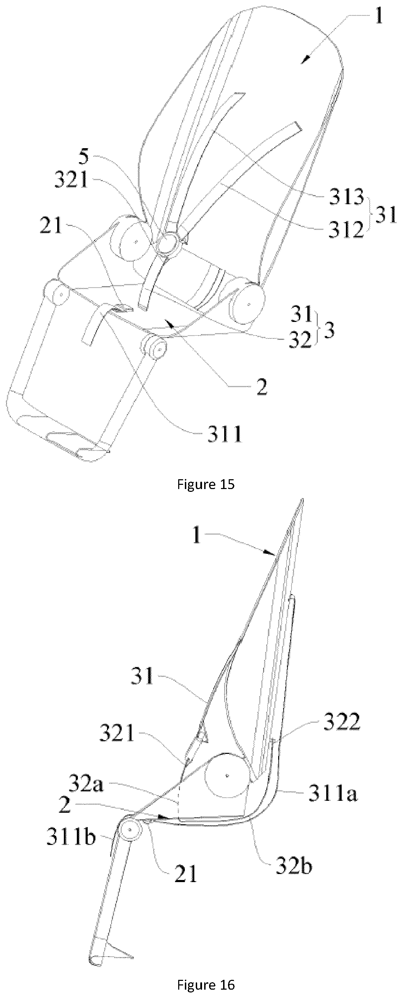

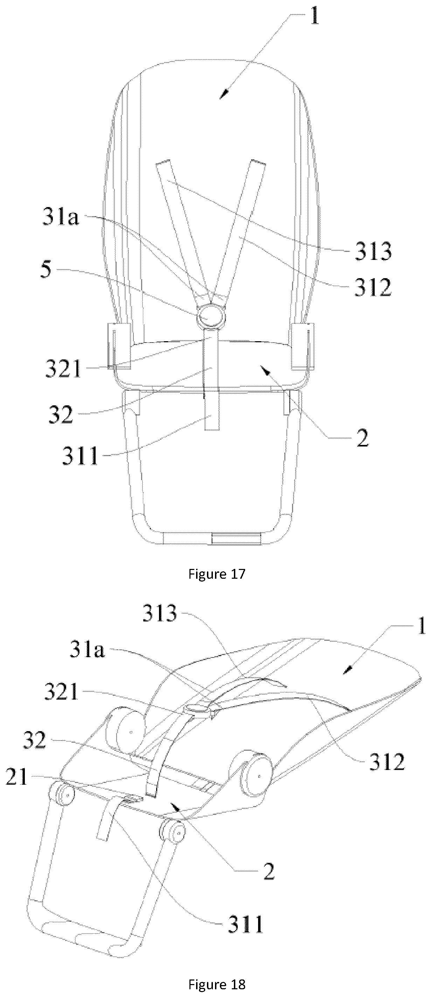

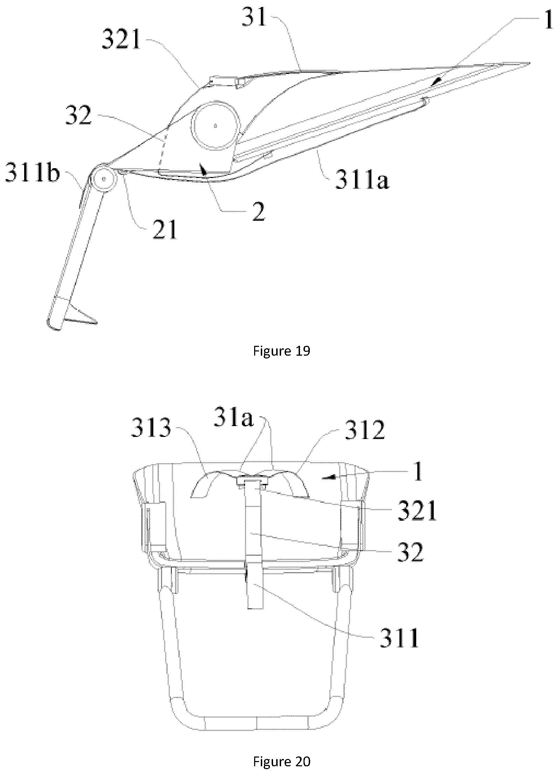

As shown in Figure 15 to Figure 20, this embodiment mainly differs from Embodiment 1 by the arrangement of the tether system 3, and in this embodiment, the tether system 3 does not comprise the two waist straps 4 in Embodiment 1, and the other arrangements are basically the same, which will not be repeated here.

### Embodiment 3

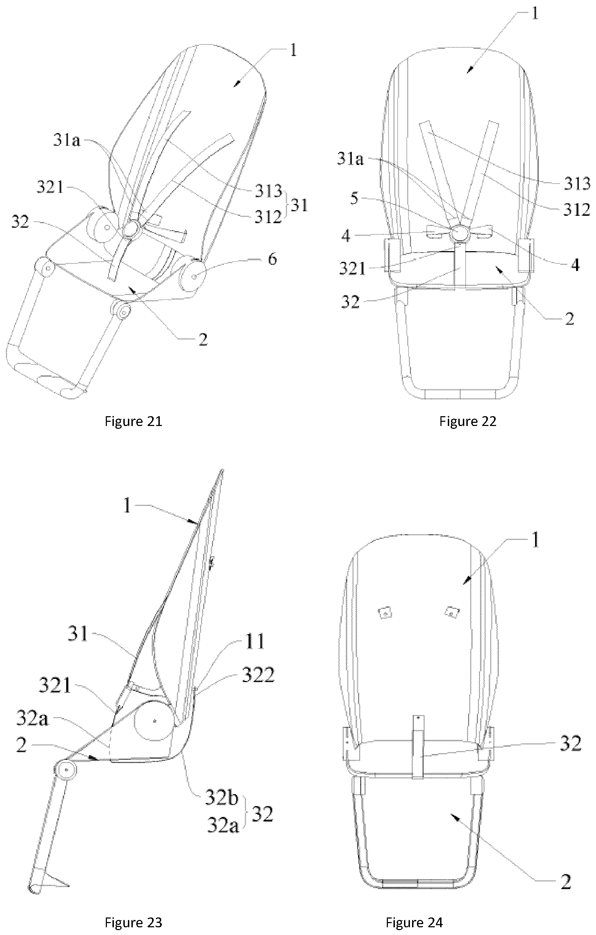

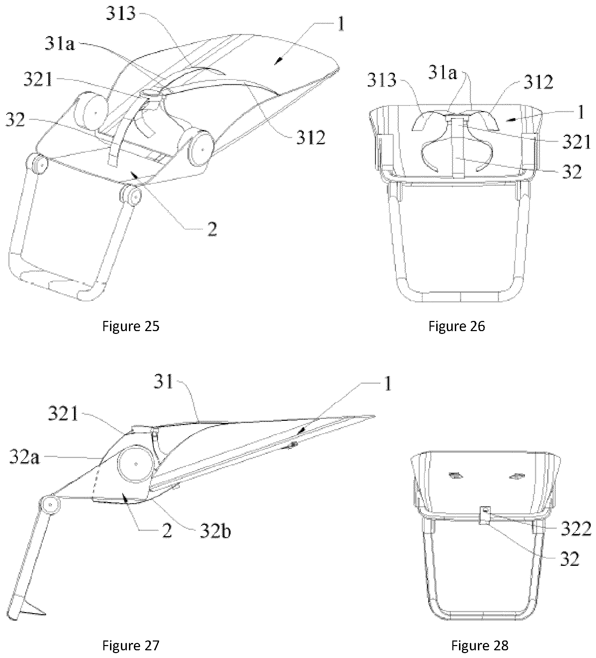

As shown in Figure 21 to Figure 28, this embodiment mainly differs from Embodiment 1 by that the arrangement of the adjustment strap 311 is missing in this embodiment. In this embodiment, the upper end portions of the left shoulder strap 312 and the right shoulder strap 313 are fixed on the backrest 1, and the lower end portions are detachably connected to the crotch strap 32 through the buckle assembly 5. Correspondingly, when the backrest 1 rotates relative to the seat 2 to achieve angle adjustment, compensation is only achieved by relying on the sliding of the crotch strap 32 along its own length direction to avoid the tether system from binding the child too tightly.

### Embodiment 4

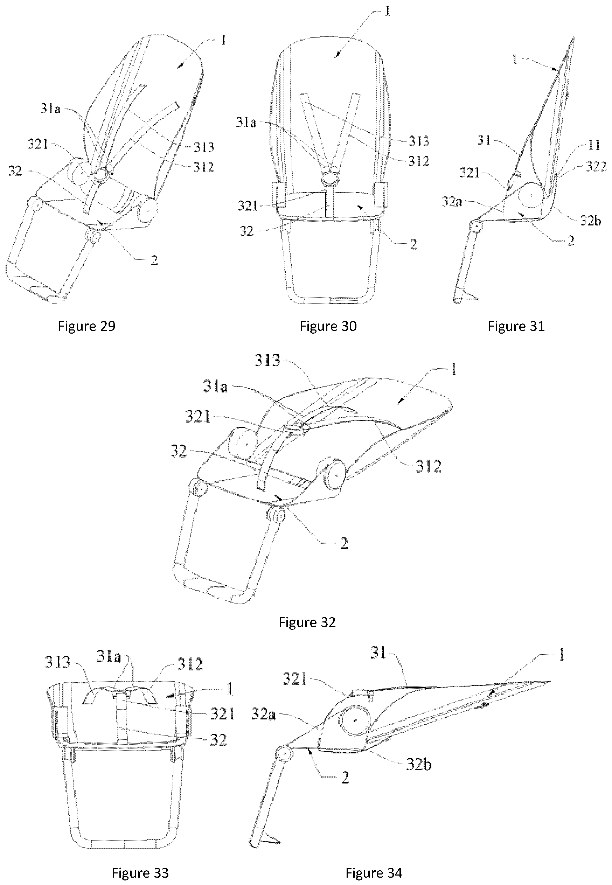

As shown in Figure 29 to Figure 34, this embodiment mainly differs from Embodiment 3 by the arrangement of the tether system 3, and in this embodiment, the tether system 3 does not comprise the two waist straps 4 in Embodiment 3, and the other arrangements are basically the same, which will not be repeated here.

Of course, the adjustment of the above functions can also be achieved on child products such as a child stroller having the above-mentioned child seat device. When a child sits in this seat device, and when adjusting the angle between the backrest 1 and the seat 2 to meet the needs of the child in different sitting or lying postures, the tether system 3 can be adjusted with the rotation of the backrest 1 and automatically compensate for the total length of a safety belt on the front side of the child body when the angle between the backrest 1 and the seat 2 is increased, such that the child is not bound too tightly; when the angle of the backrest 1 is decreased, the total length of the safety belt on the front side of the child body is automatically reduced so as to ensure that the tether system 3 binds the child firmly.

## Claims

1. A child seat device comprising a backrest (1), a seat (2) and a tether system (3), the backrest (1) being rotatably connected to the seat (2), the seat device having a sitting side and a back side, wherein the tether system (3) comprises a shoulder strap (31) and a crotch strap (32), the shoulder strap (31) is arranged on the backrest (1), the crotch strap (32) has a connecting end (321) and a fixed end (322), the connecting end (321) and the fixed end (322) are respectively arranged on two opposite end portions of the length extension direction of the crotch strap (32), the portion of the crotch strap (32) on the sitting side is a first strap segment (32a), the connecting end (321) is located on the first strap segment (32a) and can be detachably connected to one end of the shoulder strap (31), the fixed end (322) is fixedly connected to the back side of the seat device, the seat device has a sitting-posture state and a lying-posture state,
**characterized in that**
the length of the first strap segment (32a) in the sitting-posture state is shorter than the length of the first strap segment (32a) in the lying-posture state, and during the transition process of the seat device from the sitting-posture state to the lying-posture state, the length of the first strap segment (32a) gradually becomes longer.

2. The child seat device according to claim 1, **characterized in that,** the crotch strap (32) passes through the seat (2) in a manner of being able to slide in its own length direction, and during the transition process of the seat device between the sitting-posture state and the lying-posture state, the sliding of the crotch strap (32) relative to the seat (2) causes the length of the first strap segment (32a) to change.

3. The child seat device according to claim 2, **characterized in that,** the crotch strap (32) further has a second strap segment (32b) on the back side, the fixed end (322) is located on the second strap segment (32b), the second strap segment (32b) and the first strap segment (32a) are connected in the length direction, and the longer the first strap segment (32a), the shorter the second strap segment (32b).

4. The child seat device according to claim 1, **characterized in that,** the fixed end (322) is fixedly connected to the backrest (1).

5. The child seat device according to claim 4, **characterized in that,** the backrest (1) has an anchoring element (11), the fixed end (322) is fixedly connected to the anchoring element (11), and the anchoring element (11) and the rotation centerline of the backrest (1) relative to the seat (2) are spaced in the height direction of the backrest (1).

6. The child seat device according to claim 5, **characterized in that,** the anchoring element (11) is located on the backrest (1) above the rotation centerline of the backrest (1) relative to the seat (2).

7. The child seat device according to claim 1, **characterized in that,** a lower portion of the backrest (1) is connected to a rear portion of the seat (2) through a soft component, or, a lower portion of the backrest (1) is rotatably connected to a rear portion of the seat (2) through a rotation shaft (6), and the rotation centerline between the seat (2) and the backrest (1) extends in a left-right direction.

8. The child seat device according to any one of claims 1 to 7, **characterized in that,** the shoulder strap (31) slides through the backrest (1), the tether system (3) further comprises an adjustment strap (311), the adjustment strap (311) is fixedly arranged on the shoulder strap (31); the adjustment strap (311) has a connection position in front of the seat (2), and an adjustment segment (311a) between the connection position and the shoulder strap (31); and the seat (2) is provided with a strap adjustment mechanism for adjusting the length of the adjustment segment (311a).

9. The child seat device according to claim 8, **characterized in that,** the strap adjustment mechanism is a one-way lock mechanism (21) or an automatic winding mechanism.

10. The child seat device according to claim 8, **characterized in that,** the adjustment segment (311a) is located on the back side, the adjustment strap (311) is slidably connected to a front portion of the seat (2), and the adjustment strap (311) has an extension segment (311b) extending to the sitting side.

11. The child seat device according to claim 8, **characterized in that,** the position where the crotch strap (32) is arranged on the seat (2) is behind the connection position between the adjustment strap (311) and the seat (2) in the length extension direction of the seat (2).

12. The child seat device according to claim 8, **characterized in that,** the shoulder strap (31) comprises a left shoulder strap (312) and a right shoulder strap (313), the left shoulder strap (312) and the right shoulder strap (313) respectively slide through the backrest, each of the left shoulder strap (312) and the right shoulder strap (313) has a first end portion (31a) and a second end portion (31b) arranged at two opposite ends of its own length direction, the first end portions (31a) can be detachably connected to the connecting end (321) of the crotch strap (32), and the two second end portions (31b) are fixedly arranged on the adjustment strap (311).

13. The child seat device according to any one of claims 1 to 7, **characterized in that,** one end portion of the shoulder strap (31) is fixedly arranged on the backrest (1), and the other end portion of the shoulder strap (31) is detachably connected to the connecting end (321) of the crotch strap (32).

14. A child product, **characterized in that,** it comprises the child seat device according to any one of claims 1 to 13.

15. The child product according to claim 14, **characterized in that,** the child seat device is a child stroller or a child sitting saddle.

## Patentansprüche

1. Kinder-Sitzvorrichtung, aufweisend eine Rückenlehne (1), einen Sitz (2) und ein Gurtsystem (3), wobei die Rückenlehne (1) mit dem Sitz (2) drehbar verbunden ist, wobei die Sitzvorrichtung eine Sitzseite und eine Rückenseite hat, wobei das Gurtsystem (3) einen Schultergurt (31) und einen Schrittgurt (32) aufweist, wobei der Schultergurt (31) an der Rückenlehne (1) angeordnet ist, wobei der Schrittgurt (32) ein Verbindungsende (321) und eine fixiertes Ende (322) hat, wobei das Verbindungsende (321) und das fixierte Ende (322) zugeordnet an zwei entgegengesetzten Endabschnitten der Längserstreckungsrichtung des Schrittgurts (32) angeordnet sind, wobei der Abschnitt des Schrittgurts (32) an der Sitzseite ein erstes Gurtsegment (32a) ist, wobei das Verbindungsende (321) an dem ersten Gurtsegment (32a) angeordnet ist und mit einem Ende des Schultergurts (31) lösbar verbunden werden kann, wobei das fixierte Ende (322) mit der Rückenseite der Sitzvorrichtung fest verbunden ist, wobei die Sitzvorrichtung einen Sitz-Stellung-Zustand und einen Liege-Stellung-Zustand hat,
**dadurch gekennzeichnet, dass**
die Länge des ersten Gurtsegments (32a) im Sitz-Stellung-Zustand kleiner ist als die Länge des ersten Gurtsegments (32a) im Liege-Stellung-Zustand, wobei die Länge des ersten Gurtsegments (32a) während des Übergangvorgangs der Sitzvorrichtung vom Sitz-Stellung-Zustand in den Liege-Stellung-Zustand allmählich länger wird.

2. Kinder-Sitzvorrichtung gemäß Anspruch 1, **dadurch gekennzeichnet, dass** der Schrittgurt (32) derart durch den Sitz (2) hindurchpassiert, dass er imstande ist, in seiner eigenen Längsrichtung zu gleiten, wobei das Gleiten des Schrittgurts (32) relativ zum Sitz (2) während des Übergangvorgangs der Sitzvorrichtung zwischen dem Sitz-Stellung-Zustand und dem Liege-Stellung-Zustand bewirkt, dass sich die Länge des ersten Gurtsegments (32a) ändert.

3. Kinder-Sitzvorrichtung gemäß Anspruch 2, **dadurch gekennzeichnet, dass** der Schritt-Gurt (32) ferner ein zweites Gurtsegment (32b) auf der Rückseite hat, wobei das fixierte Ende (322) an dem zweiten Gurtsegment (32b) angeordnet ist, wobei das zweite Gurtsegment (32b) und das erste Gurtsegment (32a) in der Längsrichtung verbunden sind, wobei je länger das erste Gurtsegment (32a) ist, je kürzer ist das zweite Gurtsegment (32b).

4. Kinder-Sitzvorrichtung gemäß Anspruch 1, **dadurch gekennzeichnet, dass** das fixierte Ende (322) mit der Rückenlehne (1) fest verbunden ist.

5. Kinder-Sitzvorrichtung gemäß Anspruch 4, **dadurch gekennzeichnet, dass** die Rückenlehne (1) ein Verankerungselement (11) hat, wobei das fixierte Ende (322) mit dem Verankerungselement (11) fest verbunden ist, wobei das Verankerungselement (11) und die Drehzentrumslinie der Rückenlehne (1) relativ zum Sitz (2) in der Höhenrichtung der Rückenlehne (1) im Abstand sind.

6. Kinder-Sitzvorrichtung gemäß Anspruch 5, **dadurch gekennzeichnet, dass** das Verankerungselement (11) an der Rückenlehne (1) über der Drehzentrumslinie der Rückenlehne (1) relativ zu dem Sitz (2) angeordnet ist.

7. Kinder-Sitzvorrichtung gemäß Anspruch 1, **dadurch gekennzeichnet, dass** ein unterer Abschnitt der Rückenlehne (1) mit einem hinteren Abschnitt des Sitzes (2) verbunden ist durch eine Softkomponente, oder wobei ein unterer Abschnitt der Rückenlehne (1) mit einem hinteren Abschnitt des Sitzes (2) durch einen Drehschaft (6) verbunden ist, und wobei sich die Drehzentrumslinie zwischen dem Sitz (2) und der Rückenlehne (1) in einer links-rechts-Richtung erstreckt.

8. Kinder-Sitzvorrichtung gemäß irgendeinem der Ansprüche 1 bis 7, **dadurch gekennzeichnet, dass** der Schultergurt (31) durch die Rückenlehne (1) hindurch gleitet, wobei das Gurtsystem (3) ferner einen Einstellgurt (311) aufweist, wobei der Einstellgurt (311) fest an dem Schultergurt (31) angeordnet ist, wobei der Einstellgurt (311) eine Verbindungsposition vor dem Sitz (2) und ein Einstellsegment (311a) zwischen der Verbindungsposition und dem Schultergurt (31) hat, und wobei der Sitz (2) mit einem Gurteinstellmechanismus zum Einstellen der Länge des Einstellsegments (311a) versehen ist.

9. Kinder-Sitzvorrichtung gemäß Anspruch 8, **dadurch gekennzeichnet, dass** der Schultereinstellmechanismus ein Einbahn-Sperr-Mechanismus (21) oder ein Automatikwinde-Mechanismus ist.

10. Kinder-Sitzvorrichtung gemäß Anspruch 8, **dadurch gekennzeichnet, dass** das Einstellsegment (311a) auf der Rückseite angeordnet ist, wobei der Einstellgurt (311) mit einem vorderen Abschnitt des Sitzes (2) gleitverbunden ist, und wobei der Einstellgurt (311) ein Verlängerungssegment (311b) hat, das sich zur Sitzseite erstreckt.

11. Kinder-Sitzvorrichtung gemäß Anspruch 8, **dadurch gekennzeichnet, dass** die Position, wo der Schrittgurt (32) an dem Sitz (2) angeordnet ist, in der Längenerstreckungsrichtung des Sitzes (2) hinter der Verbindungsposition zwischen dem Einstellgurt (311) und dem Sitz (2) ist.

12. Kinder-Sitzvorrichtung gemäß Anspruch 8, **dadurch gekennzeichnet, dass** der Schultergurt (31) einen linken Schultergurt (312) und einen rechten Schultergurt (313) aufweist, wobei der linke Schultergurt (312) und der rechte Schultergurt (313) jeweils durch die Rückenlehne hindurch gleiten, wobei jeder von dem linken Schultergurt (312) und dem rechten Schultergurt (313) einen ersten Endabschnitt (31a) und einen zweiten Endabschnitt (31b) hat, die an zwei entgegengesetzten Enden seiner eigenen Längsrichtung angeordnet sind, wobei die ersten Endabschnitte (31a) mit dem Verbindungsende (321) des Schrittgurts (32) lösbar verbunden werden können, und wobei die zwei zweiten Endabschnitte (31b) fest an dem Einstellgurt (311) angeordnet sind.

13. Kinder-Sitzvorrichtung gemäß irgendeinem der Ansprüche 1 bis 7, **dadurch gekennzeichnet, dass** ein Endabschnitt des Schultergurts (31) fest an der Rückenlehne (1) angeordnet ist, wobei der andere Endabschnitt des Schultergurts (31) mit dem Verbindungsende (321) des Schrittgurts (32) lösbar verbunden ist.

14. Kinderprodukt, **dadurch gekennzeichnet, dass** es eine Kinder-Sitzvorrichtung gemäß irgendeinem der Ansprüche 1 bis 13 aufweist.

15. Kinderprodukt gemäß Anspruch 14, **dadurch gekennzeichnet, dass** die Kinder-Sitzvorrichtung ein Kinderwagen oder ein Kindersitzsattel ist.

## Revendications

1. Dispositif de siège pour enfant comprenant un dossier (1), un siège (2) et un système d'attache (3), le dossier (1) étant relié de manière rotative au siège (2), le dispositif de siège ayant un côté d'assise et un côté dos, dans lequel le système d'attache (3) comprend une sangle d'épaule (31) et une sangle d'entrejambe (32), la sangle d'épaule (31) est agencée sur le dossier (1), la sangle d'entrejambe (32) présente une extrémité de liaison (321) et une extrémité fixe (322), l'extrémité de liaison (321) et l'extrémité fixe (322) sont respectivement agencées sur deux parties d'extrémité opposées de la direction d'extension en longueur de la sangle d'entrejambe (32), la partie de la sangle d'entrejambe (32) sur le côté d'assise est un premier segment de sangle (32a), l'extrémité de liaison (321) est située sur le premier segment de sangle (32a) et peut être reliée de manière amovible à une extrémité de la sangle d'épaule (31), l'extrémité fixe (322) est reliée de manière fixe au côté dos du dispositif de siège, le dispositif de siège présente un état de position assise et un état de position allongée,
**caractérisé en ce que**
la longueur du premier segment de sangle (32a) dans l'état de position assise est plus courte que la longueur du premier segment de sangle (32a) dans l'état de position allongée, et pendant le processus de transition du dispositif de siège de l'état de position assise à l'état de position allongée, la longueur du premier segment de sangle (32a) devient progressivement plus longue.

2. Dispositif de siège pour enfant selon la revendication 1, **caractérisé en ce que** la sangle d'entrejambe (32) passe à travers le siège (2) de manière à pouvoir glisser dans son propre sens de la longueur, et pendant le processus de transition du dispositif de siège entre l'état de posture assise et l'état de posture allongée, le glissement de la sangle d'entrejambe (32) par rapport au siège (2) fait changer la longueur du premier segment de sangle (32a).

3. Dispositif de siège pour enfant selon la revendication 2, **caractérisé en ce que** la sangle d'entrejambe (32) présente en outre un deuxième segment de sangle (32b) sur le côté dos, l'extrémité fixe (322) est située sur le deuxième segment de sangle (32b), le deuxième segment de sangle (32b) et le premier segment de sangle (32a) sont reliés dans le sens de la longueur, et plus le premier segment de sangle (32a) est long, plus le deuxième segment de sangle (32b) est court.

4. Dispositif de siège pour enfant selon la revendication 1, **caractérisé en ce que** l'extrémité fixe (322) est reliée de manière fixe au dossier (1).

5. Dispositif de siège pour enfant selon la revendication 4, **caractérisé en ce que** le dossier (1) présente un élément d'ancrage (11), l'extrémité fixe (322) est reliée de manière fixe à l'élément d'ancrage (11), et l'élément d'ancrage (11) et la ligne centrale de rotation du dossier (1) par rapport au siège (2) sont espacés dans le sens de la hauteur du dossier (1).

6. Dispositif de siège pour enfant selon la revendication 5, **caractérisé en ce que** l'élément d'ancrage (11) est situé sur le dossier (1) au-dessus de la ligne centrale de rotation du dossier (1) par rapport au siège (2).

7. Dispositif de siège pour enfant selon la revendication 1, **caractérisé en ce qu'**une partie inférieure du dossier (1) est reliée à une partie arrière du siège (2) par un composant souple, ou une partie inférieure du dossier (1) est reliée de manière rotative à une partie arrière du siège (2) par un arbre de rotation (6), et la ligne centrale de rotation entre le siège (2) et le dossier (1) s'étend dans une direction gauche-droite.

8. Dispositif de siège pour enfant selon l'une quelconque des revendications 1 à 7, **caractérisé en ce que** la sangle d'épaule (31) glisse à travers le dossier (1), le système d'attache (3) comprend en outre une sangle de réglage (311), la sangle de réglage (311) est agencée de manière fixe sur la sangle d'épaule (31) ; la sangle de réglage (311) présente une position de liaison devant le siège (2), et un segment de réglage (311a) entre la position de liaison et la sangle d'épaule (31) ; et le siège (2) est pourvu d'un mécanisme de réglage de sangle pour le réglage de la longueur du segment de réglage (311a).

9. Dispositif de siège pour enfant selon la revendication 8, **caractérisé en ce que** le mécanisme de réglage de sangle est un mécanisme de verrouillage unidirectionnel (21) ou un mécanisme d'enroulement automatique.

10. Dispositif de siège pour enfant selon la revendication 8, **caractérisé en ce que** le segment de réglage (311a) est situé sur le côté dos, la sangle de réglage (311) est reliée de manière coulissante à une partie avant du siège (2), et la sangle de réglage (311) présente un segment d'extension (311b) s'étendant vers le côté d'assise.

11. Dispositif de siège pour enfant selon la revendication 8, **caractérisé en ce que** la position où la sangle d'entrejambe (32) est agencée sur le siège (2) se trouve derrière la position de liaison entre la sangle de réglage (311) et le siège (2) dans le sens de l'extension en longueur du siège (2).

12. Dispositif de siège pour enfant selon la revendication 8, **caractérisé en ce que** la sangle d'épaule (31) comprend une sangle d'épaule gauche (312) et une sangle d'épaule droite (313), la sangle d'épaule gauche (312) et la sangle d'épaule droite (313) glissent respectivement à travers le dossier, chacune de la sangle d'épaule gauche (312) et de la sangle d'épaule droite (313) présente une première partie d'extrémité (31a) et une deuxième partie d'extrémité (31b) agencées à deux extrémités opposées de son propre sens de la longueur, les premières parties d'extrémité (31a) peuvent être reliées de manière amovible à l'extrémité de liaison (321) de la sangle d'entrejambe (32), et les deux deuxièmes parties d'extrémité (31b) sont agencées de manière fixe sur la sangle de réglage (311).

13. Dispositif de siège pour enfant selon l'une quelconque des revendications 1 à 7, **caractérisé en ce qu'**une partie d'extrémité de la sangle d'épaule (31) est agencée de manière fixe sur le dossier (1), et l'autre partie d'extrémité de la sangle d'épaule (31) est reliée de manière amovible à l'extrémité de liaison (321) de la sangle d'entrejambe (32).

14. Produit pour enfant, **caractérisé en ce qu'**il comprend le dispositif de siège pour enfant selon l'une quelconque des revendications 1 à 13.

15. Produit pour enfant selon la revendication 14, **caractérisé en ce que** le dispositif de siège pour enfant est une poussette pour enfant ou une selle d'assise pour enfant.
